# EUROPÄISCHE PATENTSCHRIFT

(11) **EP 0 632 953 B1**
(45) Veröffentlichungstag und Bekanntmachung des Hinweises auf die Patenterteilung: **29.12.1999**
(21) Anmeldenummer: 94109538.2
(22) Anmeldetag: 21.06.1994
(51) Int. Cl.: A01B 59/06, A01B 63/11

(54) **Bodenbearbeitungsmaschine**
Soil working machine
Machine pour le travail du sol

(30) Priorität: 29.06.1993 DE 4321579; 10.07.1993 DE 4323154
(43) Veröffentlichungstag der Anmeldung: 11.01.1995
(73) Patentinhaber: Franz Kleine Agrartechnik GmbH, 33154 Salzkotten (DE)
(72) Erfinder: Schulte, Reinold, D-33106 Paderborn (DE)
(74) Vertreter: Rehberg, Elmar, Dipl.-Ing.

(56) Entgegenhaltungen:
- DE-A- 1 920 898
- DE-A- 2 060 871
- DE-A- 3 327 568
- DE-A- 3 607 257
- DE-B- 1 149 615
- DE-C- 803 811
- FR-A- 2 505 130
- FR-A- 2 521 817
- US-A- 4 858 698

## Beschreibung

Die Erfindung bezieht sich auf eine an einen Schlepper anhängbare Bodenbearbeitungsmaschine, insbesondere eine Sämaschine, nach dem Oberbegriff des Patentanspruchs 1.

Konkret beschäftigt sich die vorliegende Erfindung mit dem Problemkreis der Direktsaat, d. h. der Einbringung von Sägut in nicht oder nur geringfügig vorbearbeitete Böden. Zumindest findet bei der Direktsaat vor dem Einbringen des Säguts kein Pflügen des Bodens statt. Auf diese Weise wird sowohl die natürliche Bodenstruktur im Inneren des Bodens als auch die beispielsweise durch Wurzelbildung stabilisierte Bodenoberfläche erhalten. Die stabilisierte Oberflächenstruktur zeigt gegenüber durch Pflügen auf die Einsaat von Saatgut vorbereiteten Böden eine deutlich verbesserte Resistenz gegenüber Wind- und Wassererosion. Darüberhinaus reduziert der entfallende Arbeitsschritt des Pflügens natürlich auch den Gesamtarbeits- und Energieaufwand beim Bestellen der Böden.

Die nicht gepflügte, vor allem durch Wurzelbildung stabilisierte Bodenoberfläche bringt jedoch den beim Einsäen in den

Boden eingreifenden Werkzeugen, insbesondere den Säscharen, einen hohen Widerstand entgegen. Diesem Widerstand kann in aller Regel nicht dadurch begegnet werden, daß die Säschare eine sich selbsttätig in den Boden eingrabende Form aufweisen. Vielmehr ist die Verwendung von sogenannten rotierenden Säscharen erforderlich, um ein Auftürmen von Pflanzenresten vor den Säscharen zu vermeiden. Rotierende Säschare weisen jeweils zwei in einem spitzen Winkel zueinander angestellte, drehbar gelagerte und scharfkantig ausgebildete Drehscheiben auf. Diese werden schon allein aufgrund ihrer Formgebung bei einer Bewegung längs der Bodenoberfläche aus dem Boden herausgedrängt. Für eine ordnungsgemäße Saatgutablage ist jedoch ein Eingreifen der Säschare in den Boden erforderlich. Entsprechend müssen die rotierenden Säschare in den Boden eingedrückt werden. Die hierzu notwendigen Kräfte hängen stark von der Art des Bodens sowie dessen Zustand ab und können bei der Direktsaat durchaus eine Größenordnung von mehreren kN erreichen. Die Schwierigkeit besteht nun darin, die zum sicheren Eingriff der rotierenden Säschare in den Boden notwendigen Kräfte zuverlässig aufzubringen.

Zu diesem Zweck ist es bei einer Sämaschine bekannt, großzügig dimensionierte Kraftgeber für eine Rückstellkraft zwischen den Dodenbearbeitungswerkzeugen und dem Rahmen vorzusehen. Dabei sind die Bodenbearbeitungswerkzeuge gruppenweise über Parallelogrammlenkeranordnungen an dem Rahmen gelagert und gegen die Rückstellkraft zwischen den Bodenbearbeitungswerkzeugen und dem Rahmen nach oben verschwenkbar. Die Kraftgeber greifen zum Hervorrufen der Rückstellkräfte zwischen dem Rahmen und den Bodenbearbeitungswerkzeugen an den Parallelogrammlenkeranordnungen an. Jede Gruppe der Bodenbearbeitungswerkzeuge umfaßt ein Säaggregat mit einem rotierenden Säschar, einem die maximale Eindringtiefe des Säschars in den Boden bestimmenden Stüztrad und einem dem Säschar nachgeschalteten Schließrad zum Wiederzudrücken der Saatfurche. An der Parallelogrammlenkeranordnung greift eine Spiralfeder, die zwischen den jeweiligen Oberlenkern und den jeweiligen Unterlenkern angeordnet ist, als Kraftgeber an und ruft die Rückstellkraft zwischen dem Rahmen und den Bodenbearbeitungswerkzeugen hervor, die die Bodenbearbeitungswerkzeuge auf den Boden hin beaufschlagt. Die auf diese Weise bereitstellbaren Kräfte sind jedoch begrenzt, da sie in der Summe sämtlicher Werkzeuge von dem Rahmen aufzunehmen sind und diesen nach oben drücken. Der nach oben gerichteten Kraft hat der Rahmen nur sein eigenes Gewicht und den Anhebwiderstand der vierachsigen Lenkeranordnung zwischen dem Schlepper und dem Rahmen entgegenzusetzen. Hiermit sind für die bereitstellbaren Rückstellkräfte zwischen dem Rahmen und den Werkzeugen enge Grenzen gesetzt. Darüberhinaus wirkt sich die Spiralfeder in einen vergleichsweise ungünstigen Weg-Kraft-Verlauf aus. Müssen die Werkzeuge beispielsweise einem Stein nach oben hin ausweichen, so steigt die von der Feder aufgebrachte Rückstellkraft an. Hierdurch wird die Gefahr von Beschädigungen der Werkzeuge durch den Stein vergrößert. Umgekehrt ist die Rückstellkraft bei der maximalen Eindringtiefe der Werkzeuge in den Boden, also in der normalen Arbeitsstellung, vergleichsweise gering. Darüberhinaus kann es aufgrund der Feder zu unerwünschten, ungedämpften Schwingungen zwischen den Werkzeugen einerseits und dem Rahmen andererseits kommen. Letztlich ist die von der Feder aufgebrachte Rückstellkraft nur mit großem Aufwand an die jeweiligen Bodenverhältnisse anpaßbar.

Eine andere bekannte Sämaschine mit einem Rahmen und einer Mehrzahl von an dem Rahmen gelagerten Bodenbearbeitungswerkzeugen, wobei die Bodenbearbeitungswerkzeuge über Parallelogrammlenkeranordnungen an dem Rahmen gelagert sind, weist besonders schwer ausgebildete Werkzeuge bzw. an den Werkzeugen angebrachte Zusatzgewichte auf, um das gewünschte Eingreifen der Werkzeuge in den Boden sicherzustellen. Das Gesamtgewicht der Sämaschine erreicht dabei die Größenordnung von mehr als einer Tonne. Entsprechend müssen sämtliche Bestandteile der Sämaschine in aufwendiger Weise sehr stabil ausgelegt sein, und ein Anheben der Sämaschine mit dem Schlepper ist erschwert. Darüberhinaus kommt es zu Schwierigkeiten, wenn der Boden die hohen Eindrückkräfte auf die Werkzeuge nicht erfordert. In diesem Fall müssen die Gewichtskräfte auf die Werkzeuge durch die die Eindringtiefe der Werkzeuge in den Boden bestimmenden Stüzträder abgetragen werden. Dies führt zwangläufig zu einer unerwünschten Bodenverdichtung, der nur durch aufwendige breitflächige Stüzträder entgegengewirkt werden kann. Breitflächige Stüzträder sind jedoch eigentlich unerwünscht, da sie wenig geeignet sind, das Bodenniveau direkt an der Stelle des Säschars zu erfassen. Außerdem ist die Umrüstung zwischen den verschiedenen Stützrädern aufwendig.

Aus der US-A-4 858 698 ist eine Bodenbearbeitungsmaschine bekannt, bei der ein Hydraulikzylinder an einer vierachsigen Lenkeranordnung zwischen einem Schlepper und einem Rahmen angreift, um den Rahmen nach unten zu beaufschlagen. Dabei ist der Hydraulikzylinder mit einem vorgespannten Druckspeicher für das Hydraulikmedium verbunden.

Eine derartige Bodenbearbeitungsmaschine geht auch aus der DE-A-36 07 257 hervor. Hier sind komkrete Bodenbearbeitungswerkzeuge vorgesehen, die über vorgespannte Blattfedern an dem Rahmen gelagert sind. Die Blattfedern dienen als Kraftgeber, die die Bodenbearbeitungswerkzeuge nach unten beaufschlagende Rückstellkräfte zwischen dem Rahmen und den Bodenbearbeitungswerkzeugen hervorrufen.

Eine Bodenbearbeitungsmaschine nach dem Oberbegriff des Anspruchs 1 ist aus der FR-A-2 521 817 bekannt. Hier ist zusätzlich zu dem Hydraulikzylinder, der an einer vierachsigen Lenkeranordnung zwischen dem Schlepper und dem Rahmen angreift, um den Rahmen nach unten zu beaufschlagen, ein weiterer Hydraulikzylinder vorgesehen, der zwischen dem Rahmen und Bodenbearbeitungswerkzeugen wirkt, um diese anzuheben.

Bodenbearbeitungsmaschinen, bei denen zwischen einem Pflug und einem Schlepper wirkende Hydraulikzylinder verwendet werden, um die Hinterräder des Schleppers zusätzlich zur Gewichtskraft nach unten zu beaufschlagen, sind aus der DE-B-11 49 615 und der DE-A-19 20 898 bekannt. Aus der DE-B-11 49 615 geht dabei auch die Verwendung eines Druckspeichers für den Hydraulikzylinder hervor.

Aus der DE-A-33 27 568 sind Hydraulikzylinder zur Höheneinstellung von Bodenbearbeitungswerkzeugen bekannt.

Die FR-A-2 505 130 beschreibt, wie mit einem Hydraulikzylinder eine an einen Schlepper angehängte Bodenbearbeitungsmaschine gegenüber einer Viergelenkanordnung mit Oberlenker und anhebbaren Unterlenkern zusätzlich anhebbar ist.

Der Erfindung liegt die Aufgabe zugrunde, eine Bodenbearbeitungsmaschine nach dem Oberbegriff des Patentanspruchs 1 derart weiterzuentwickeln, daß die zum Eindrücken der Bodenbearbeitungswerkzeuge in den Boden erforderliche Kraft zuverlässig zur Verfügung gestellt wird, ohne die Masse der Bodenbearbeitungsmaschine zu erhöhen.

Die Aufgabe wird erfindungsgemäß durch die kennzeichnenden Merkmale des Patentanspruchs 1 gelöst.

Um den Rahmen der Bodenbearbeitungsmaschine gegenüber dem Schlepper nach unten mit einer Kraft beaufschlagen zu können, ist bei der neuen Bodenbearbeitungsmaschine der an der vierachsigen Lenkeranordnung angreifende Hydraulikzylinder vorgesehen. Dabei ist die konkrete Anordnung des Hydraulikzylinders grundsätzlich unerheblich. Es kommt allein darauf an, daß der Hydraulikzylinder so an dem Schlepper, dem Rahmen, den Unterlenkern des Schleppers und/oder dem Oberlenker angreift, daß der Rahmen gegenüber dem Schlepper nach unten beaufschlagt wird.

Der Hydraulikzylinder ist mit einem gasgefüllten Druckspeicher verbunden. Bei ausreichender Dimensionierung des Druckspeichers ergibt sich so eine vernachlässigbare Weg-Kraft-Abhängigkeit, d. h. der Hydraulikzylinder führt zu einer konstanten Beaufschlagung des Rahmens in Richtung auf den Boden. Darüberhinaus wirkt die Kombination des Hydraulikzylinders mit dem gasgefüllten Druckspeicher als Dämpferanordnung, so daß ein Auftreten von Schwingungen zwischen dem Rahmen und dem Schlepper wirkungsvoll vermieden wird.

Das Gewicht herkömmlicher Schlepper beträgt typischerweise 2,5 bis 4 Tonnen, wobei die Masse zu etwa 40 % auf die Vorderachse und zu etwa 60 % auf die Hinterachse verteilt ist. Mit Hilfe des Hydraulikzylinders wird von den auf die Hinterachse entfallenden 1,5 bis 2,4 Tonnen problemlos eine einer Tonne entsprechende Gewichtskraft, d. h. eine Gewichtskraft von ca. 100 kN auf den Rahmen übertragen. Dabei wird zugleich die Bodenverdichtung durch die Hinterräder des Schleppers verringert. Durch eine Einstellbarkeit des Hydraulikzylinders ist gewährleistet, daß immer nur soviel von der Gewichtskraft des Schleppers auf den Rahmen übertragen wird, wie der Rahmen seinerseits an Kräften von den Werkzeugen aufzunehmen hat. In keinem Fall wird jedoch mehr Bodenverdichtung verursacht, als durch einen Schlepper mit einer angehängten herkömmlichen Bodenbearbeitungsmaschine einer leichten Baureihe.

Bei der neuen Bodenbearbeitungsmaschine sind die Bodenbearbeitungswerkzeuge einzeln oder gruppenweise, vorzugsweise über Parallelogrammlenkeranordnungen nach oben verschwenkbar an dem Rahmen gelagert, wobei an den Parallelogrammlenkeranordnungen angreifende Hydraulikzylinder die Bodenbearbeitungswerkzeuge nach unten beaufschlagende Rückstellkräfte zwischen dem Rahmen und den Bodenbearbeitungswerkzeugen hervorrufen. Diese Hydraulikzylinder sind mit demselben Druckspeicher verbunden wie der an der vierachsigen Lenkeranordnung zwischen dem Schlepper und dem Rahmen angreifende Hydraulikzylinder. Die Hydraulikzylinder als Kraftgeber für die Rückstellkraft zwischen dem Rahmen und den Werkzeugen sind auf einfachste Weise durch den in dem Druckspeicher herrschenden Druck hinsichtlich der Größe der Rückstellkraft einstellbar. Darüberhinaus bewirken die Hydraulikzylinder in Verbindung mit dem gasgefüllten Druckspeicher auch hier eine Dämpfung von zwischen den Werkzeugen und dem Rahmen auftretenden Schwingungen. Der einer Konstantkraft vergleichbare Weg-Kraft-Verlauf der Hydraulikzylinder führt zudem zu einer geringen Gefahr von Beschädigungen der Werkzeuge, wenn diese beispielsweise vor Steinen nach oben ausweichen müssen. Die Anordnung eines einzigen Druckspeichers, der über Stichleitungen mit den einzelnen Hydraulikzylindern verbunden ist, ermöglicht nicht nur eine zentrale Verstellbarkeit aller Rückstellkräfte. Er führt auch dazu, daß sich bei einer Tendenz zum Anheben der Werkzeuge beispielsweise aufgrund eines anwachsenden Bodenwiderstands die Vorspannung des Rahmens auf den Boden automatisch erhöht. Umgekehrt nimmt beim Anheben der Bodenbearbeitungsmaschine mit Hilfe der Unterlenker des Schleppers die Beaufschlagung des Rahmens auf dem Boden ab, da die einzelnen Werkzeuge beim Anheben der Bodenbearbeitungsmaschine nach unten ausweichen.

Die an den Parallelogrammlenkeranordnungen angreifenden Hydraulikzylinder können an den jeweiligen Oberlenkern einerseits und an den Werkzeugen angreifen, wobei der Angriffspunkt der Hydraulikzylinder an den Bodenbearbeitungswerkzeugen vor der Ebene liegt, die durch die Drehachsen zwischen den Oberlenkern und den Bodenbearbeitungswerkzeugen und zwischen den jeweiligen Unterlenkern und den Bodenbearbeitungswerkzeugen definiert ist. Auf diese Weise ist eine kompakte Anbringung der Hydraulikzylinder in vertikaler Anordnung vor den eigentlichen Werkzeugen möglich.

Das Gasvolumen des Druckspeichers ist in der Arbeitsstellung der Bodenbearbeitungsmaschine vorzugsweise mindestens viermal so groß wie das durch sämtliche Hydraulikzylinder verdrängbare Volumen. Eine solche Dimensionierung des Druckspeichers stellt sicher, daß bei allen Ausweichbewegungen der Werkzeuge eine nahezu konstante und damit unerwünschten Schwingungen sowie Beschädigungen des Werkzeugs entgegenwirkende Rückstellkraft vorliegt.

Der Druckspeicher kann mittels einer Hydraulikanlage des Schleppers mit Druck beaufschlagbar und gegenüber der Hydraulikanlage absperrbar sein. Es reicht aus, den Druckspeicher zu Beginn des Einsatzes der Bodenbearbeitungsmaschine auf den gewünschten Druck zu bringen und diesen Druck anschließend durch Absperren gegenüber der Hydraulikanlage des Schleppers zu fixieren. Damit ist das Drucksystem der Bodenbearbeitungsmaschine von Leckagen in der Hydraulikanlage des Schleppers unabhängig. Ein Verstellen des Drucks in dem Druckspeicher ist nur erforderlich, wenn sich die Bodenverhältnisse und damit der den Werkzeugen entgegengebrachte Widerstand des Bodens ändert. Gegebenenfalls ist Druck aus dem Druckspeicher abzulassen oder der Druck zu erhöhen.

Der Druckspeicher kann für einen Arbeitsdruck von 30 bis 300 bar vorgesehen sein, wobei ein Manometer den Arbeitsdruck anzeigt. Um das Innenvolumen des Druckspeichers möglichst klein zu halten, muß dort ein ausreichend hoher Druck vorliegen. Dieser hohe Druck ermöglicht gleichzeitig eine kompakte Bauweise der einzelnen zum Aufbringen der Rückstellkräfte verwendeten Hydraulikzylinder. Das Manometer zur Anzeige des Arbeitsdrucks ist erforderlich, um den jeweils gewünschten Arbeitsdruck einzustellen und zu überwachen.

Der an der vierachsigen Lenkeranordnung angreifende Hydraulikzylinder kann an dem Rahmen einerseits und an einem Hebelarm eines zweiarmigen Kraftübertragungshebels andererseits angreifen, wobei der Kraftübertragungshebel um die Drehachse zwischen dem Rahmen und den Unterlenkern des Schleppers verschwenkbar ist und sich mit seinem anderen Hebelarm an den Unterlenkern abstützt. Bei der Anordnung des Hydraulikzylinders ist auf eine möglichst kompakte Bauweise der Bodenbearbeitungsmaschine zu achten. Weiterhin ist anzustreben, daß der Hydraulikzylinder das Anbringen der Bodenbearbeitungsmaschine an den Schlepper nicht erschwert oder behindert. Beiden Aspekten wird die hier beschriebene Anordnung gerecht. Durch den Kraftübertragungshebel kann der Hydraulikzylinder vertikal und damit parallel zu der Befestigungsebene des Rahmens an den Unterlenkern und dem Oberlenker angeordnet werden. Der Kraftübertragungshebel kann dabei um dieselbe Drehachse verschwenkbar sein, wie der Rahmen gegenüber den Unterlenkern des Schleppers. Eine besondere Befestigung des Kraftübertragungshebels an den Unterlenkern ist nicht erforderlich, da sich der Kraftübertragungshebel einseitig an den Unterlenkern abstützt. Bei einem sich ausdehnenden Hydraulikzylinder erfolgt die Abstützung an der Unterseite der Unterlenker, bei einem sich zusammenziehenden Hydraulikzylinder an der Oberseite der Unterlenker. Es versteht sich, daß zu einer einfachen Anbringung der Bodenbearbeitungsmaschine an den Schlepper der Kraftübertragungshebel bzw. der Hydraulikzylinder zu entspannen ist.

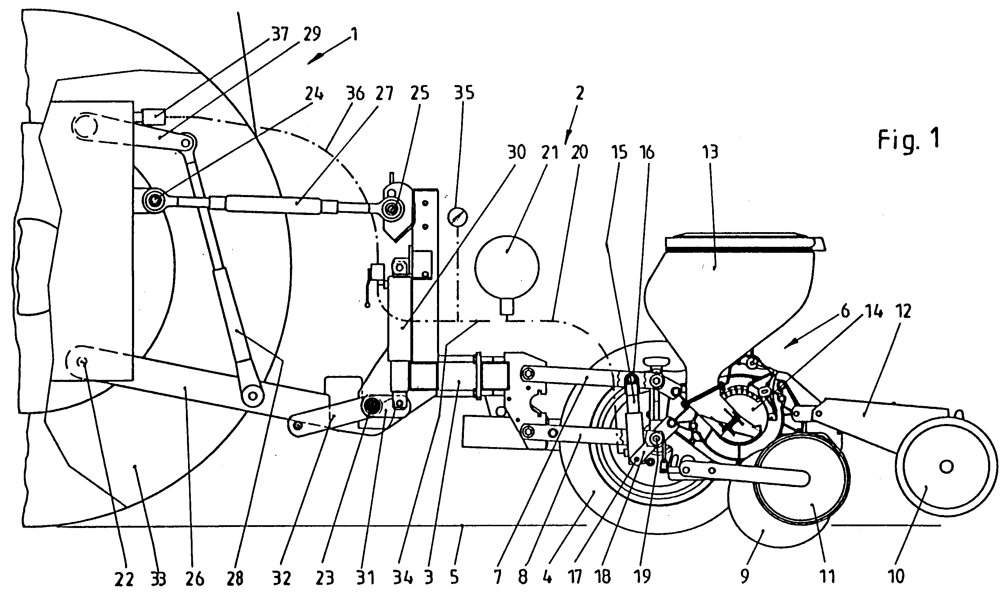

Die Erfindung wird im Folgenden anhand von Ausführungsbeispiels näher erläutert und beschrieben. Die Figuren 1 bis 3 zeigen jeweils eine Sämaschine als Ausführungsform der neuen Bodenbearbeitungsmaschine.

Die in der Figur 1 in einem Längsschnitt dargestellte Bodenbearbeitungsmaschine 2 ist an einen Schlepper 1 angehängt. Die Sämaschine 2 weist einen Rahmen 3 auf, der über zwei seitliche Laufräder 4 über den Boden 5 rollt. An dem Rahmen 3 sind mehrere Einzelkornsäaggregate 6 jeweils über eine Parallelogrammlenkeranordnung mit Oberlenkern 7 und Unterlenkern 8 in vertikaler Richtung verschwenkbar gelagert. Jedes Einzelkornsäaggregat 6 weist als Bodenbearbeitungswerkzeuge ein rotierendes Säschar 9 und ein Schließrad 10 für die von dem Säschar 9 bereitgestellte Saatfurche auf. Die Eingriffstiefe des Säschars 9 in den Boden 5 wird durch ein Stüztrad 11 bestimmt, das bei Erreichen der gewünschten Eingriffstiefe auf dem Boden 5 abrollt. Das Schließrad 10 ist über einen Arm 12 verschwenkbar gegenüber den weiteren Bestandteilen des Einzelkornsäaggregats 6 gelagert und über den Arm 12 in Richtung auf den Boden 5 vorgespannt. Hierzu ist eine hier nicht dargestellte Spiralfeder vorgesehen. Das Einzelkornsäaggregat 6 weist weiterhin einen Vorratsbehälter 13 für das Sägut und eine Vereinzelungsvorrichtung 14 auf, von der einzelne Körner des Säguts in die von dem Säschar 9 geöffnete Saatfurche abgelegt werden. Die Vereinzelungsvorrichtung 14 weist eine getriebliche Verbindung zu dem Laufrad 4 des Rahmens 3 auf und wird durch das Laufrad 4 angetrieben. Es kann aber auch ein separater motorischer Antrieb für die Vereinzelungsvorrichtung 14 vorgesehen sein. Je nach Widerstand des Bodens 5 weist das Säschar 9 eine mehr oder weniger große Tendenz zum Ausweichen aus dem Boden 5 auf. Um dieser Tendenz entgegenzuwirken, greift an der Parallelogrammlenkeranordnung zwischen dem Rahmen 3 und dem Säaggregat 6 ein Hydraulikzylinder 15 an. Der erste Angriffspunkt 16 des Hydraulikzylinders 15 an der Parallelogrammlenkeranordnung befindet sich an den Oberlenkern 7. Der zweite Angriffspunkt 17 befindet sich an einem Verlängerungsarm 18, der starr mit dem Säaggregat 6 verbunden ist und mit diesem um eine gemeinsame Drehachse 19 um die Unterlenker 8 verschwenkbar ist. Der Hydraulikzylinder 15 steht über eine Stichleitung 20 mit einem gasgefüllten Druckspeicher 21 in Verbindung. Bei einem vergleichsweise großen Gasvolumen in dem Druckspeicher 21 im Verhältnis zu dem von dem Hydraulikzylinder verdrängten Volumen an Hydraulikflüssigkeit beaufschlagt der Hydraulikzylinder 15 das Einzelkornsäaggregat 6 mit einer nahezu konstanten, d.h. wegunabhängigen Rückstellkraft auf den Boden 5. Diese Rückstellkraft wirkt genauso auf den Rahmen 3, der durch die Rückstellkraft tendenziell angehoben wird. Der Rahmen 3 ist über eine vierachsige Lenkeranordnung an den Schlepper 1 angehängt. Die vier Drehachsen 22 bis 25 der Lenkeranordnung sind dabei an den Enden von anhebbaren Unterlenkern 26 des Schleppers 1 einerseits und an den Enden eines darüber angeordneten, verschwenkbaren Oberlenkers 27 andererseits angeordnet. Die Unterlenker 26 des Schleppers 1 sind über Hubstangen 28 und Hubarme 29 hydraulisch anhebbar und senken sich durch ihr Eigengewicht bzw. durch angehängte Gewichte ab. Der Oberlenker 21 ist in seiner Länge veränderlich, um die Neigung des Rahmens 3 gegenüber dem Boden 5 einzustellen. Um ein Anheben des Rahmens 3 durch die von dem Hydraulikzylinder 15 hervorgerufenen Rückstellkräfte zu vermeiden, womit auch ein Abheben der Laufräder 4 und damit ein Ausfall des Antriebs für die Vereinzelungsvorrichtung 14 verbunden wäre, sind zwei den Unterlenkern 26 zugeordnete Hydraulikzylinder 30 vorgesehen. Die Hydraulikzylinder 30 greifen an dem Rahmen 3 einerseits und an einem Hebelarm 31 eines zweiarmigen Kraftübertragungshebels 31, 32 andererseits an. Der zweite Hebelarm 32 des Kraftübertragungshebels 31, 32 greift von unten an dem jeweiligen Unterlenker 26 an. Die Hebelachse des Kraftübertragungshebels 31, 32 fällt dabei mit der Drehachse 23 zusammen. Auf diese Weise ruft der Hydraulikzylinder bei Beaufschlagung eine den Rahmen 3 relativ zum Schlepper 1 nach unten drückende Rückstellkraft hervor. Diese Rückstellkraft verhindert ein Ausweichen des Rahmens 3 nach oben aufgrund der von den Einzelkornsäaggregaten 6 übertragenen Rückstellkräfte. Der Hydraulikzylinder 30 bewirkt dabei, daß ein Teil des auf den Hinterrädern 33 des Schleppers 1 lastenden Gewichts auf den Rahmen 3 übertragen wird. Beaufschlagt wird der Hydraulikzylinder 30 über eine Leitung 34 von dem Druckspeicher 21. Der Arbeitsdruck in dem Druckspeicher 21 wird von einem Manometer 35 angezeigt. Der Arbeitsdruck in dem Druckspeicher 21 wird über eine Druckleitung 36 von der Hydraulikanlage 37 des Schleppers 1 bereitgestellt. Die Druckleitung 36 ist eine Verlängerung der Leitung 34. Der Druckspeicher 21 muß jedoch nicht kontinuierlichem mit Druck versorgt werden, sondern es reicht aus, ihn ein einziges Mal aufzufüllen. Anschließend ist das Drucksystem aus den Hydraulikzylindern 15 und 30, den Stichleitungen 20, der Leitung 34, dem Manometer 35 und dem Druckspeicher 21 mit einem Sperrventil 38 verriegelbar. Damit ist das Drucksystem von Undichtigkeiten der Hydraulikanlage 37 unabhängig. Das Gasvolumen des Druckspeichers 21 ist vorteilhafterweise um ein vielfaches größer als die von den einzelnen Hydraulikzylindern 15, 30 verdrängbaren Volumina an Hydraulikflüssigkeit. Damit weisen die Rückstellkräfte eine nahezu konstante Größe über den Einfederweg der Hydraulikzylinder auf. Die Kombination der Hydraulikzylinder 15, 30 mit dem gasgefüllten Druckspeicher 21 führt weiterhin in vorteilhafter Weise zu einer Dämpfung von Schwingungen zwischen dem Rahmen 3 und dem Schlepper 1 einerseits und dem Rahmen 3 und den Einzelkornsäaggregaten 6 andererseits.

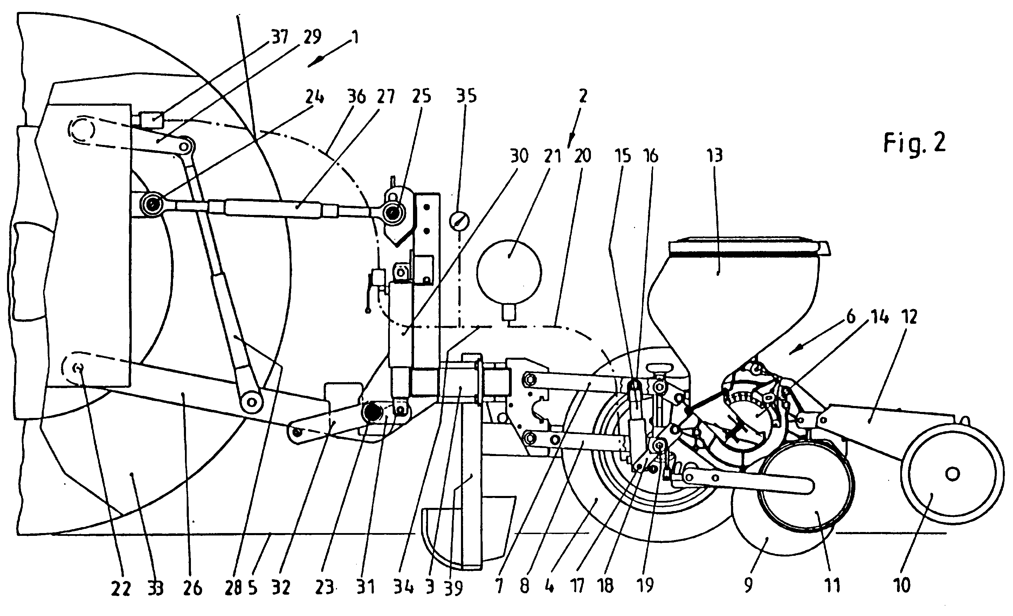

Die in Figur 2 wiedergegebene Sämaschine 2 unterscheidet sich von derjenigen gemäß Figur 1 durch zusätzliche, starr an dem Rahmen 3 gelagerte Düngerlanzen 39. Die Düngerlanzen 39 sind jeweils einem Säaggregat 6 zugeordnet und dienen zum Einbringen von Düngemitteln in die jeweilige Säspur. Die Düngerlanzen 39 sind wie die rotierenden Säschare 9 in den Boden 5 eindringende Bodenbearbeitungswerkzeuge, die tendenziell nach oben aus dem Boden 5 herausgedrängt werden. Entsprechend übertragen auch die Düngerlanzen 39 eine nach oben gerichtete Kraft auf den Rahmen 3. Dieser Kraft wirken die Hydraulikzylinder 30 in der vierachsigen Lenkeranordnung 26, 27 zwischen dem Schlepper 1 und dem Rahmen 3 entgegen, um ein Ausweichen des Rahmens 3 nach oben zu verhindern.

Anhand der Sämaschine 2 mit den Düngerlanzen 39 gemäß Figur 2 wird deutlich, daß die Beaufschlagung des Rahmens 3 über die vierachsige Lenkeranordnung 26, 27 zwischen dem Rahmen 3 und dem Schlepper 1 auch für ausschließlich starr an dem Rahmen 3 gelagerten Bodenbearbeitungswerkzeugen nutzbar ist.

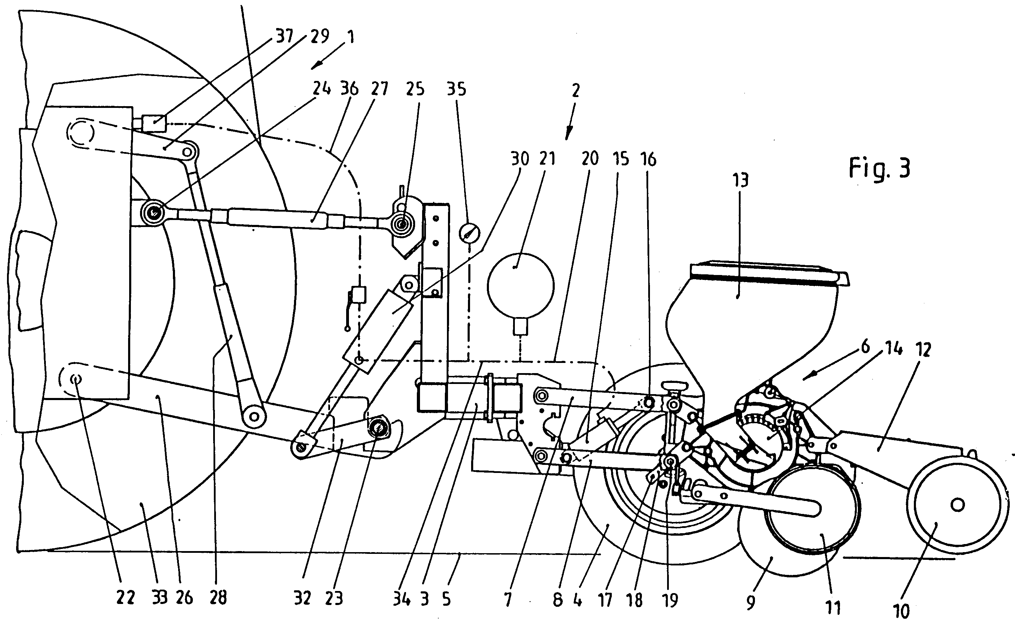

Die Sämaschine gemaß Figur 3 unterscheidet sich von derjenigen gemäß Figur 1 durch die Anordnung der Hydraulikzylinder 30 in der vierachsigen Lenkeranordnung 26, 27. Während die Hydraulikzylinder 30 gemäß Figur 1 als Druckzylinder mit einer von der Hydraulikflüssigkeit beaufschlagten Kreisflächen ausgebildet sind, handelt es sich bei den Hydraulikzylindern 30 gemäß Figur 3 um Zugzylinder mit von der Hydraulikflüssigkeit beaufschlagten Ringflächen. Dabei greifen die Hydraulikzylinder 30 gemäß Figur 3 an den den Unterlenkern zugekehrten Hebelarmen 32 der hier nur einarmig ausgebildeten Kraftübertragungshebel 32 an. So werden auch hier die Kraftübertragungshebel 32 von unten an die Unterlenker 26 angedrückt und führen zu einer Beaufschlagung des Rahmens 3 auf den Boden 5.

Auch die Hydraulikzylinder 15 in der Parallelogrammlenkeranordnung 7, 8 sind gemäß Figur 3 im Gegensatz zu Figur 1 als Zugzylinder mit von der Hydraulikflüssigkeit beaufschlagter Ringfläche ausgebildet. Darüberhinaus unterscheiden sie sich durch die Lage ihrer Angriffspunkte. Gemäß Figur 3 greifen die Hydraulikzylinder 15 ausschließlich an den Oberlenkern 7 und den Unterlenkern 8 der Parallelogrammlenkeranordnungen 7, 8 an. Die hieraus resultierende Beaufschlagung der Säaggregate 6 ist aber auch hier nach unten auf den Boden 5 gerichtet.

### BEZUGSZEICHENLISTE

- 1 -: Schlepper
- 2 -: Sämaschine
- 3 -: Rahmen
- 4 -: Laufrad
- 5 -: Boden
- 6 -: Einzelkornsäaggregat
- 7 -: Oberlenker
- 8 -: Unterlenker
- 9 -: Säschar
- 10 -: Schließrad
- 11 -: Stüztrad
- 12 -: Arm
- 13 -: Vorrartsbehälter
- 14 -: Vereinzelungsvorrichtung
- 15 -: Hydraulikzylinder
- 16 -: Angriffspunkt
- 17 -: Angriffspunkt
- 18 -: Verlängerungsarm
- 19 -: Drehachse
- 20 -: Stichleitung
- 21 -: Druckspeicher
- 22 -: Drehachse
- 23 -: Drehachse
- 24 -: Drehachse
- 25 -: Drehachse
- 26 -: Unterlenker
- 27 -: Oberlenker
- 28 -: Hubstange
- 29 -: Hubarm
- 30 -: Hydraulikzylinder
- 31 -: Hebelarm
- 32 -: Hebelarm

## Patentansprüche

1. An einen Schlepper (1) anhängbare Bodenbearbeitungsmaschine, insbesondere Sämaschine (2), mit einem Rahmen (3) und mit einzeln oder gruppenweise nach oben verschwenkbar an dem Rahmen gelagerten Bodenbearbeitungswerkzeugen, wobei zwischen dem Rahmen (3) und dem Schlepper (1) eine vierachsige Lenkeranordnung mit parallel anhebbaren Unterlenkern (8) des Schleppers (1) und einem darüber angeordneten, verschwenkbaren Oberlenker (7) vorgesehen ist, wobei ein an der vierachsigen Lenkeranordnung angreifender Hydraulikzylinder (30) eine den Rahmen (3) nach unten beaufschlagende Rückstellkraft zwischen dem Schlepper (1) und dem Rahmen (3) hervorruft und mit einem gasgefüllten Druckspeicher (21) verbunden ist, und wobei weitere, zwischen dem Rahmen (3) und den Bodenbearbeitungswerkzeugen wirkende Hydraulikzylinder (15) vorgesehen sind, **dadurch gekennzeichnet**, daß die weiteren, zwischen dem Rahmen (3) und den Bodenbearbeitungswerkzeugen wirkenden Hydraulikzylinder (15) die Bodenbearbeitungswerkzeuge nach unten beaufschlagende Rückstellkräfte zwischen dem Rahmen (3) und den Bodenbearbeitungswerkzeugen hervorrufen, und mit demselben Druckspeicher (21) verbunden sind wie der an der vierachsigen Lenkeranordnung angreifende Hydraulikzylinder (30).

2. Bodenbearbeitungsmaschine nach Anspruch 1, dadurch gekennzeichnet, daß die Bodenbearbeitungswerkzeuge über Parallelogrammlenkeranordnungen (7, 8) an dem Rahmen (3) gelagert sind, an denen die Hydraulikzylinder (15) angreifen.

3. Bodenbearbeitungsmaschine nach Anspruch 2, dadurch gekennzeichnet, daß die an den Parallelogrammlenkeranordnungen (7, 8) angreifenden Hydraulikzylinder (15) an den jeweiligen Oberlenkern (7) einerseits und an den Bodenbearbeitungswerkzeugen andererseits angreifen, wobei der Angriffspunkt der Hydraulikzylinder (15) an den Bodenbearbeitungswerzeugen vor der Ebene liegt, die durch die Drehachsen zwischen den Oberlenkern (7) und den Bodenbearbeitungswerkzeugen und zwischen den jeweiligen Unterlenkern (8) und den Bodenbearbeitungswerkzeugen definiert ist.

4. Bodenbearbeitungsmaschine nach Anspruch 1, dadurch gekennzeichnet, daß das Gasvolumen des Druckspeichers (21) in der Arbeitsstellung der Bodenbearbeitungsmaschine mindestens viermal so groß wie das durch sämtliche Hydraulikzylinder (15, 30) verdrängbare Volumen ist.

5. Bodenbearbeitungsmaschine nach Anspruch 1 oder 4, dadurch gekennzeichnet, daß der Druckspeicher (21) mittels einer Hydraulikanlage (37) des Schleppers (2) mit Druck beaufschlagbar und gegenüber der Hydraulikanlage (37) absperrbar ist.

6. Bodenbearbeitungsmaschine nach Anspruch 5, dadurch gekennzeichnet, daß der Druckspeicher (21) für einen Arbeitsdruck von 30 bis 300 bar vorgesehen ist, wobei ein Manometer (35) den Arbeitsdruck angezeigt.

7. Bodenbearbeitungsmaschine nach Anspruch 1, dadurch gekennzeichnet, daß der Hydraulikzylinder (30) an dem Rahmen (3) einerseits und an einem Hebelarm (31) eines zweiarmigen Kraftübertragungshebels (31, 32) andererseits angreift, wobei der Kraftübertragungshebel (31, 32) um die Drehachse (23) zwischen dem Rahmen (3) und den Unterlenkern (26) des Schleppers (2) verschwenkbar ist und sich mit seinem anderen Hebelarm (32) an den Unterlenkern (26) abstützt.

## Claims

1. A soil working machine attachable to a tractor (1), particularly a sowing machine (2), the machine comprising: a frame (3), and soil working tools which are supported by the frame and which are upwardly swivelling as singles or in groups; a four axes-swinging arm-arrangement with lower swinging arms (8), which belong to the tractor (1) and which are liftable in parallel, and with a swivelling upper swinging arm (7), which is arranged above the lower swinging arms, being provided between the frame (3) and the tractor (1); a hydraulic cylinder (30), which engages the four axes-swinging arm-arrangement, creating a restoring force between the tractor (1) and the frame (3), which acts upon the frame (3) in a downward direction, and being connected to a gas-filled pressure reservoir (21); and further hydraulic cylinders (15), which act between the frame (3) and the soil working tools, being provided; **characterized in that** the further hydraulic cylinders (15) acting between the frame (3) and the soil working tools, create restoring forces between the frame (3) and the soil working tools, which act upon the soil working tools in a downward direction, and are connected to the same pressure reservoir (21) as the hydraulic cylinder (30) engaging the four axes-swinging arm-arrangement.

2. The soil working machine according to claim 1, **characterized in that** the soil working tools are supported by the frame (3) by means of parallelogram-swinging arm-arrangements (7, 8) which are engaged by the hydraulic cylinders (15).

3. The soil working machine according to claim 2, **characterized in that** the hydraulic cylinders (15) engaging the parallelogram-swinging arm-arrangements (7, 8) engage, on the one hand, the respective upper swinging arms (7) and, on the other hand, the soil working tools; the point of engagement of the hydraulic cylinders (15) at the soil working tools being in front of a plane which is defined by the swivel axes between the upper swinging arms (7) and the soil working tools and between the respective lower swinging arms (8) and the soil working tools.

4. The soil working machine according to claim 1, **characterized in that**, in the operation position of the soil working machine, the gas volume of the pressure reservoir (21) is at least four times the total volume which is displacable by all hydraulic cylinders (15, 30).

5. The soil working machine according to claim 1 or 4, **characterized in that** the pressure reservoir (21) is loadable with pressure by means of a hydraulic installation (37) of the tractor (2) and lockable with regard to the hydraulic installation (37).

6. The soil working machine according to claim 5, **characterized in that** the pressure reservoir (21) is designed for an operation pressure of 30 to 300 bar, a pressure gauge (35) indicating the operation pressure.

7. The soil working machine according to claim 1, **characterized in that** the hydraulic cylinder (30), on the one hand, engages the frame (3) and, on the other hand, engages one lever arm (31) of a force transfer lever (30, 31) of first class; the force transfer lever (31, 32) swivelling about the swivel axis (23) between the frame (3) and the lower swinging arms (26) of the tractor (2), and, with its other lever arm (32), supporting itself on the lower swinging arms (26).

## Revendications

1. Machine pour le travail du sol pouvant être accrochée à un tracteur (1), notamment semoir (2), avec un cadre (3) et avec des outils pour le travail du sol montés individuellement ou par groupes et à pivotement vers le haut sur le cadre, où entre le cadre (3) et le tracteur (1) il est prévu une disposition de barres à quatre axes avec des barres inférieures (8) du tracteur (1) pouvant être soulevées parallèlement et avec une barre supérieure (7) pivotante disposée au-dessus, où un cylindre hydraulique (30) attaquant la disposition de barres à quatre axes engendre une force de rappel sollicitant le cadre (3) vers le dessous entre le tracteur (1) et le cadre (3), le cylindre hydraulique étant relié à un réservoir pressurisé (21) rempli de gaz, et où d'autres cylindres hydrauliques (15) agissant entre le cadre (3) et les outils de travail du sol sont prévus, caractérisée en ce que les autres cylindres hydrauliques (15) agissant entre le cadre (3) et les outils de travail du sol engendrent, entre le cadre (3) et les outils de travail du sol, des forces de rappel sollicitant les outils de travail du sol vers le dessous, et sont reliés au même réservoir pressurisé (21) que le cylindre hydraulique (30) attaquant la disposition de barres à quatre axes.

2. Machine pour le travail du sol suivant la revendication 1, caractérisée en ce que les outils de travail du sol sont par l'intermédiaire dispositions de barres en parallélogramme (7, 8) montés sur le cadre (3), dispositions qu'attaquent les cylindres hydrauliques (15).

3. Machine pour le travail du sol suivant la revendication 2, caractérisée en ce que les cylindres hydrauliques (15) qui attaquent les dispositions de barres en parallélogramme (7, 8) attaquent d'une part les barres supérieures (7) et d'autre part les outils de travail du sol, le point d'attaque des cylindres hydrauliques (15) sur les outils de travail du sol étant situé à l'avant du plan qui est défini par les axes de rotation entre les barres supérieures (7) et les outils de travail du sol et entre les barres inférieures (8) correspondantes et les outils de travail du sol.

4. Machine pour le travail du sol suivant la revendication 1, caractérisée en ce que dans la position de travail de la machine pour le travail du sol, le volume de gaz du réservoir pressurisé (21) est au moins le quadruple du volume global qui peut être refoulé par tous les cylindres hydrauliques (15, 30).

5. Machine pour le travail du sol suivant la revendication 1 ou la revendication 4, caractérisée en ce que le réservoir pressurisé (21) peut être pressurisé au moyen d'une installation hydraulique (37) du tracteur 2 et peut être verrouillé à l'égard de cette installation, hydraulique (37).

6. Machine pour le travail du sol suivant la revendication 1, caractérisée en ce que le réservoir pressurisé (21) est conçu pour une pression de travail de 30 à 300 bar, un manomètre (35) affichant la pression de travail.

7. Machine pour le travail du sol suivant la revendication 1, caractérisée en ce que le cylindre hydraulique (30) attaque le cadre (3) d'une part et un bras de levier (31) d'un levier de transmission de force à deux bras (31, 32) d'autre part, le levier de transmission de force (31, 32) pouvant être pivoté sur l'axe de rotation (23) entre le cadre (3) et les bras inférieurs (26) du tracteur (2) et s'appuyant par son autre bras de levier (32) sur les barres inférieures (26).
